(19) **Europäisches Patentamt / European Patent Office / Office européen des brevets**

(11) **EP 1 567 844 B1**

(12) **EUROPEAN PATENT SPECIFICATION**

(45) Date of publication and mention
of the grant of the patent:
**06.06.2007 Bulletin 2007/23**

(51) Int Cl.:
***G01M 17/04*** *(2006.01)*

(21) Application number: **03811841.0**

(22) Date of filing: **25.11.2003**

(86) International application number:
**PCT/IB2003/005388**

(87) International publication number:
**WO 2004/048134 (10.06.2004 Gazette 2004/24)**

(54) **MONITORING OF SHOCK ABSORBERS**

ÜBERWACHUNG VON STOSSDÄMPFERN

CONTROLE D'AMORTISSEURS

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.11.2002 ZA 200209607**

(43) Date of publication of application:
**31.08.2005 Bulletin 2005/35**

(73) Proprietor: **Shock-Doc Ltd.**
**Faerie Glen,**
**0043 Pretoria (ZA)**

(72) Inventors:
• **VENTER, Frederik, Petrus**
**0250 Brits (ZA)**
• **VENTER, Michael, Jacobus**
**Wapadrand,**
**0050 Pretoria (ZA)**

• **VENTER, Hermanus, Nicolass**
**0250 Brits (ZA)**
• **BRESLER, Johanna, Frederika**
**Onverwacht,**
**0557 Ellisras (ZA)**

(74) Representative: **Cohausz & Florack**
**Patent- und Rechtsanwälte**
**Bleichstrasse 14**
**40211 Düsseldorf (DE)**

(56) References cited:
**EP-A1- 0 018 959       EP-A2- 0 355 398**
**AU-A1- 200 071 537       US-A- 6 019 495**

• **PATENT ABSTRACTS OF JAPAN 13 January 1984 & JP 59 006 306 A 13 January 1984**
• **DATABASE WPI Week 199535, Derwent Publications Ltd., London, GB; AN 1995-269686, XP002988471 & ZA 9 406 337 A (KLEYNHANS) 28 June 1995**

**Description**

The present invention relates to a method of determining the damping factor of a shock absorber and a corresponding shock absorber monitoring system.

EP 0 355 398 A2 discloses a method of determining the damping factor of a shock absorber and a corresponding shock absorber monitoring system. According to document EP 0 355 398 A2 as accelerometer an electronic unit for recording vibrating movements of a vehicle body is provided for safety tests of acceleration-absorbing shock absorbers. A signal from the accelerometer is processed by a microcomputer, wherein the condition of the shock absorber, especially the damping factor, is determined by a comparison against an assessment table. The problem of the prior art disclosed in document EP 0 355 398 A2 is that the determined damping factor is relatively imprecise.

It is therefore an object of the present invention to provide a method of determining the damping factor of a shock absorber and a corresponding shock absorber monitoring system with which the accuracy in determining the damping factor is improved.

To achieve the above object according to the present invention there is provided a method of determining the damping factor of a shock absorber which includes attaching an accelerometer to one of a first and a second part of the shock absorber, displacing the first- and second parts of the shock absorber relative to one another at least once, measuring the acceleration of the parts of the shock absorber relative to each other by reading a signal from the accelerometer over a period of time at discrete intervals, to generate a series of measured acceleration values, and determining the damping factor of the shock absorber by modeling the movement properties of the shock absorber mathematically with a differential equation to generate a series of theoretical acceleration values and mathematically fitting the series of theoretical acceleration values to the series of measured acceleration values.

Furthermore, the above object is achieved according to the present invention by a shock absorber monitoring system, which includes an accelerometer for generating an acceleration signal, the accelerometer being removably attachable to one of a first part and a second part of a shock absorber, a processor connected to the accelerometer, the processor being operable to read the acceleration signal from the accelerometer over a period of time at discrete intervals, to generate a series of measured acceleration values and to calculate a damping factor of the shock absorber when the first- and second parts of the shock absorber are displaced relative to one another by modeling the movement properties of the shock absorber mathematically with a differential equation to generate a series of theoretical acceleration values and mathematically fitting the series of theoretical acceleration values to the series of measured acceleration values, and an indicator responsive to the processor, operable to display a value representative of the damping factor of the shock absorber.

The shock absorber may be monitored as a unit removed from a vehicle, or it may be monitored while it is fixed to a suspension of a vehicle. The method may then include attaching the accelerometer to a vehicle body which is fast with one of the first part and the second part of the shock absorber, in a position proximate the shock absorber to be monitored, for example, proximate one of the wheels of the vehicle, thereby to determine the damping factor of the shock absorber at the wheel and thereby limiting the effect of the shock absorbers at other wheels of the vehicle.

The accelerometer may include attachment means, to permit removable attachment to the vehicle body, or to one part of the shock absorber. The attachment means may, for example, include a magnetic coupling device, a suction cup, or the like.

The method may include mathematically solving the differential equation in a time domain, thereby to obtain a theoretical solution to a series of theoretical position values over the period of time.

The method may include mathematically fitting the series of theoretical acceleration values to the series of measured acceleration values in an iterative manner.

The iterative fitting of the series of theoretical acceleration values to the series of measured acceleration values may be repeated until a predefined correlation between the series of theoretical- and measured acceleration values is obtained.

The mathematical fitting of the series of theoretical acceleration values to the series of measured acceleration values may employ a "Nelder Mead" algorithm.

The method may include generating a damping constant from the fitted series of theoretical acceleration values from the mathematical model, thereby to approximate the damping factor of the shock absorber with the damping constant and may include comparing the approximated damping factor of the shock absorber with qualitative data from a manufacturer of the shock absorber.

The method may include generating an alarm when the approximated damping factor falls outside tolerable limits of the qualitative data or if displacement of the parts of the shock absorber is insufficient or excessive.

The method may be repeated a plurality of times and the damping factors thereby obtained may be stored to permit the average of the stored damping factors to be calculated.

Hence, the shock absorber monitoring system may include a storage device to store the damping factors. The storage device, or another storage device, may store a set of instructions, which instructions, when executed by the processor, direct the processor to perform the mathematical calculations as herein described.

The accelerometer may be remote from the processor.

In one embodiment, the shock absorber monitoring system may include an output buffer which is electrically connected to the accelerometer and may include an input buffer, which is electrically connected to the processor. The output buffer and the input buffer may then be connected by means of an electrical cable.

In another embodiment, the accelerometer may include a radio frequency transmitter and the processor may include a radio frequency receiver responsive to the transmitter, operable to receive the acceleration signal by means of a radio frequency signal.

The shock absorber monitoring system may include a power supply, in use to supply electrical power to any one, or more of the accelerometer, the processor and the indicator.

The shock absorber monitoring system may include a communication port connected to the processor, operable to send and receive data to and from a remote device, such as a personal computer.

The invention will now be described, by way of example only, with reference to the following drawings, in which:

Figure 1 shows a three dimensional view of a shock absorber monitoring system in accordance with the invention, in use;
Figure 2 shows a schematic block diagram of a shock absorber monitoring system in accordance with the invention;
Figure 3 shows a graph of a series of acceleration values plotted over time; and
Figure 4 shows a schematic circuit diagram of part of the shock absorber monitoring system of Figure 2.

In the drawings, reference numeral 10 generally indicates a shock absorber monitoring system. The shock absorber monitoring system 10 includes an accelerometer 12, a handheld housing 18 and a coiled electrical cable 20 connecting the accelerometer 12 and the handheld housing 18.

In this example the accelerometer is an ADXL202AE device manufactured by Analog Devices. The accelerometer is a dual-axis accelerometer, of which only one axis is used to determine the damping factor of a vehicle shock absorber.

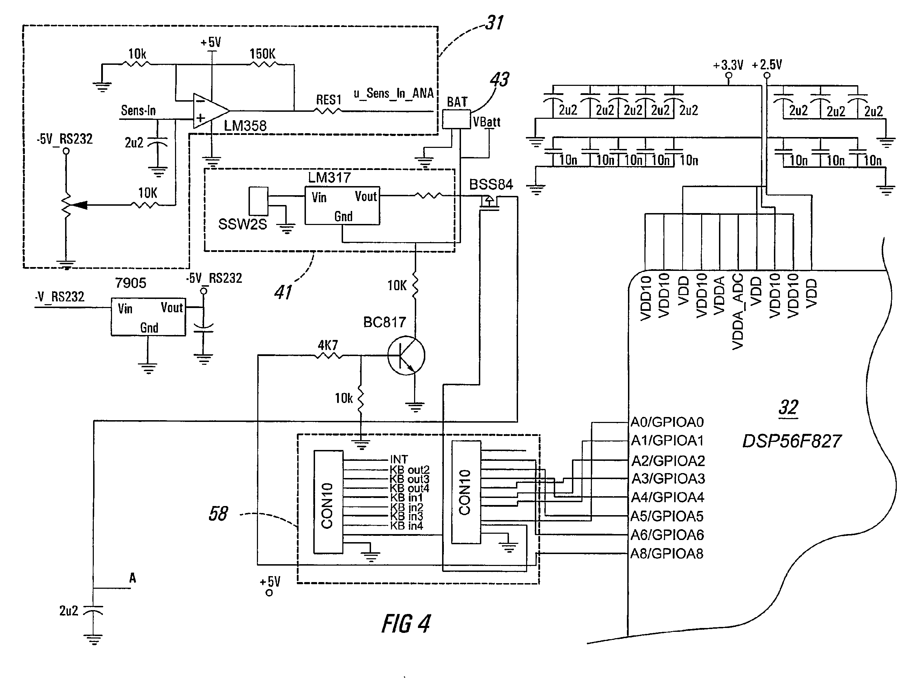

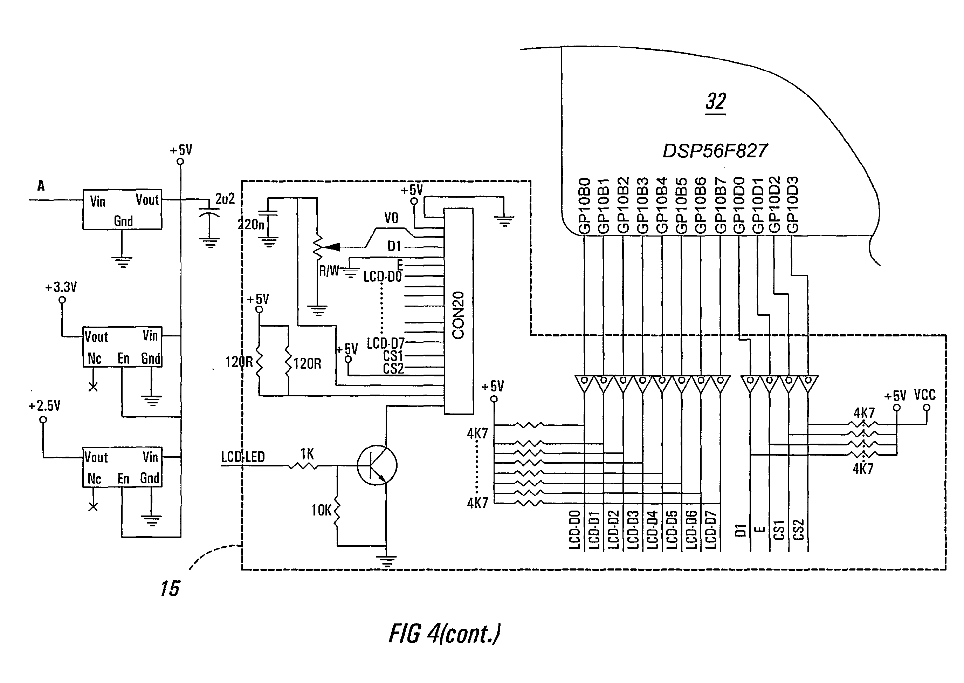

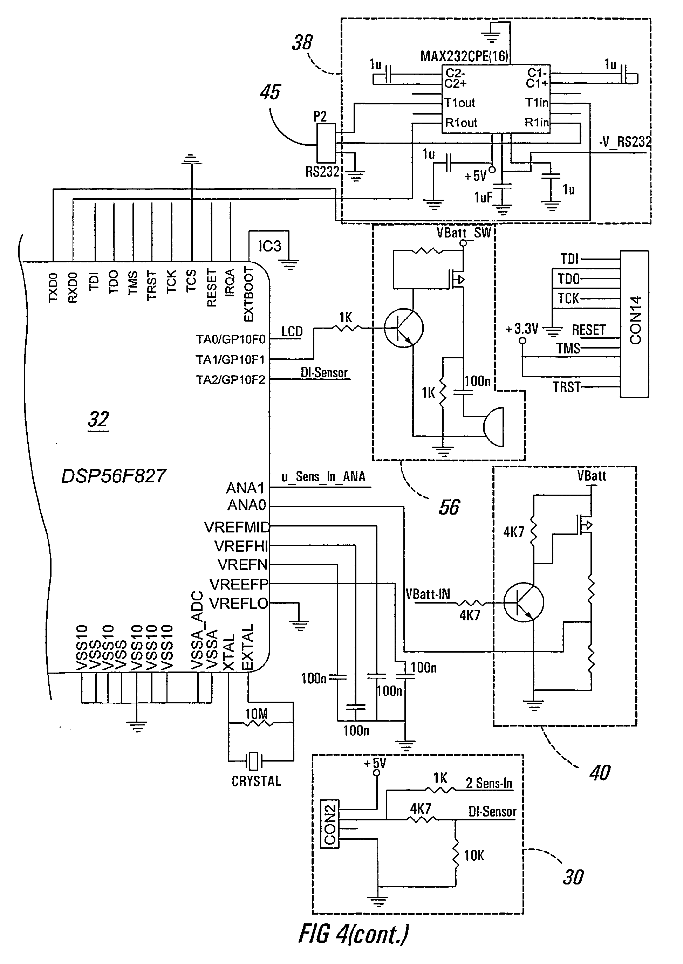

An indicator 14 in the form of a liquid crystal display (LCD) and a membrane keypad 46 are provided on the handheld housing 18. The shock absorber monitoring system 10 also includes a buzzer 56 (see Figure 4) which gives audio signals to a user during use of the shock absorber monitoring system 10. The shock absorber monitoring system 10 is used to monitor a suspension (not shown) of a vehicle 16. In use, the accelerometer 12 is mounted proximate a location where the shock absorber (not shown) is installed in the suspension of the vehicle.

The accelerometer 12 has attachment means in the form of a magnetic coupling device (not shown) by which it is removably attached to a metal body of the vehicle 16 so that one of the two axes of the accelerometer is substantially perpendicular to ground level. In another embodiment of the invention, the attachment means may be in the form of a suction cup.

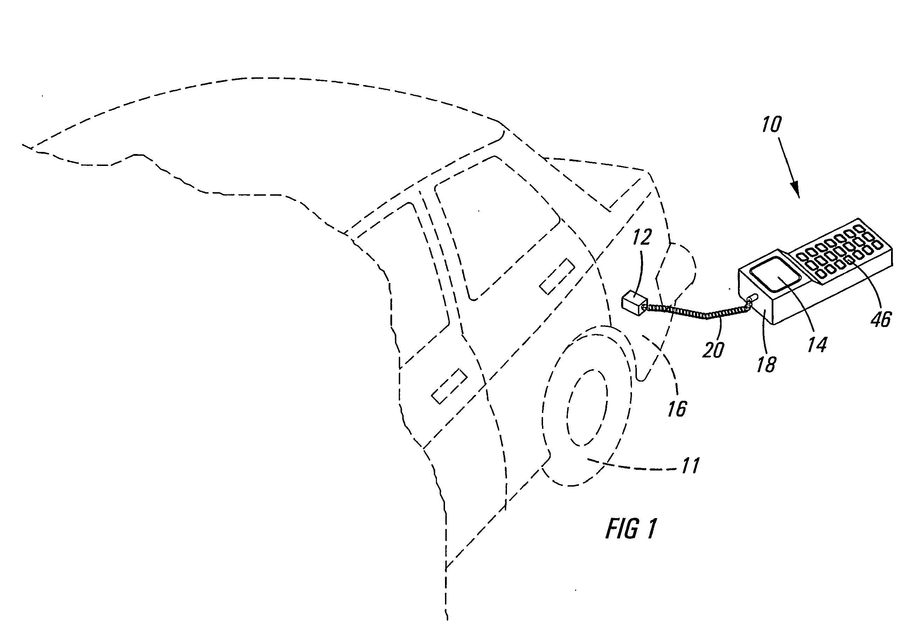

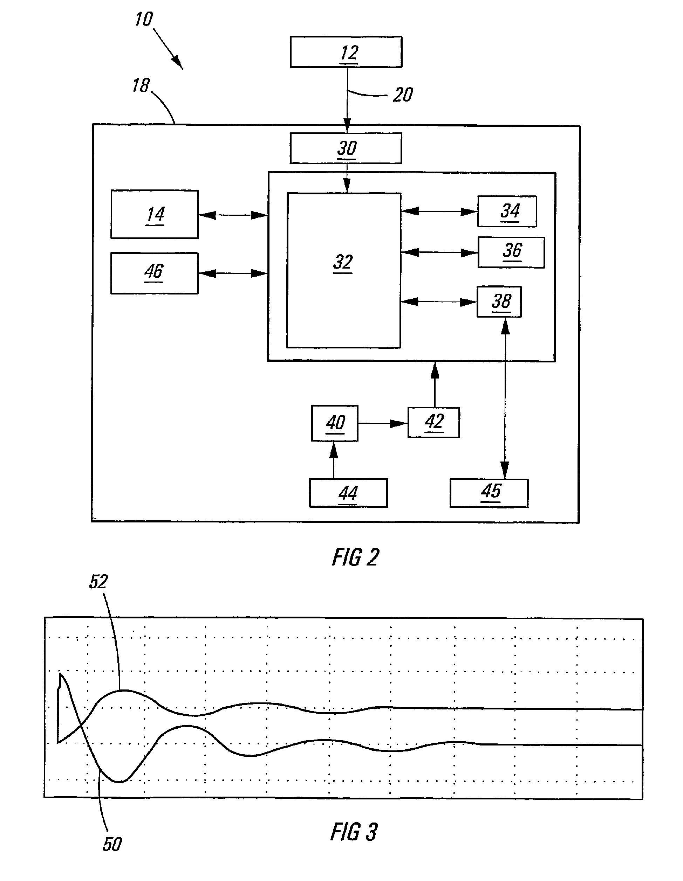

Referring to Figure 2 and to Figure 4, the shock absorber monitoring system 10 is shown in a schematic block diagram and in a schematic circuit diagram. The accelerometer 12 includes a unity gain operational amplifier (not shown). The unity gain operational amplifier of the accelerometer 12 is connected to signal conditioning circuitry 30, by means of the coiled electrical cable 20 of Figure 1. The signal conditioning circuitry 30 is connected to an analog input of a micro processor 32. The signal condition circuitry 30 also includes an operational amplifier wired as a subtractor/amplifier combination and which is tuned to cancel the effect of gravity on the accelerometer and, in addition, to amplify the acceleration signal. The operational amplifiers are both LM358-type devices. The micro processor is a DSP56F827FG80 device available from Motorola.

The shock absorber monitoring system 10 includes a communication interface 38 leading to connector 45. The communication interface is connected to the micro processor 32, and includes an RS232 driver, capable of a data transfer rate of 19200 baud.

The micro processor 32 includes flash random access memory (Flash RAM) 36 for storage of non-volatile data and static random access memory (SRAM) 34 for temporary storage of data and which are schematically shown in Figure 3 but not in Figure 4. The micro processor 32 has the capability to perform mathematical calculations as described below.

The shock absorber monitoring system 10 also includes a battery charger 40, connected to connector 44 and to a rechargeable battery 42. Two parts of the battery charger are shown in Figure 4 by reference numerals 40 and 41. Only a connecter 43 to the battery 42 is shown in Figure 4. The battery charger regulates the supply voltage to the shock absorber monitoring system 10 to 5 volts and provides an electrical supply to charge the battery which is a 7.2V Nickel-Cadmium battery.

The liquid crystal display (LCD) indicator 14 has a graphic display capability and is connected to the micro processor 32. Only the connector and analog control circuitry 15 are shown in Figure 4. The LCD display is a 128x64 dots display from Emerging Display Technologies (EDT) with an 8 bit wide data/address bus interface.

The membrane keypad 46 is connected directly to the micro processor 32 for providing a user interface to the micro processor 32. In use, the micro processor 32 reads the inputs from the keypad 46 as 4 rows and 4 columns connected to 8 digital I/O signals via pull-up resistors (not shown). In Figure 4, only connector 58 to the keypad 46 is shown.

The micro processor 32 has internal processor Flash RAM (not shown) on which executable code, that directs the operation of the micro processor 32, is stored.

The executable code includes commands to read keystrokes from a user via the membrane keypad 46, and includes commands to display information to the user via the indicator 14. Typically the user will be requested to indicate which shock absorber is to be tested (left front, right front, left rear, right rear), the user will also be requested to supply vehicle information, and the results of tests will be displayed on the indicator 14.

In use, the shock absorber monitoring system 10 is switched on and off with a key on the keypad 46, the correct measurement range for the type of shock absorber to be tested is selected on the keypad 46, the accelerometer 12 is attached to the vehicle body 16 and the vehicle body 16 is displaced on its suspension by rapidly pushing down on the body so as to compress the shock absorber in the suspension and then allowing the suspension to settle. As the suspension settles, incidental acceleration values of the vehicle body 16 on the suspension are recorded at discrete time intervals over a period of time, which time is typically the settling period of the suspension. The series of values, when plotted over time, is indicated in the graph in Figure 3 by reference numeral 50.

A formula 54 (see below) providing a theoretical time domain solution to the displacement value of a differential equation is also stored in the processor Flash RAM. With properly selected tuning values the formula 54 will produce a range of displacement values that may produce a graph similar to that indicated by reference numeral 52 in Figure 3. The formula 54 for the time domain solution of the displacement value is as follows:

$$Y = 2 \left(1-(PK/2t)(T/t)\right) Y_1 - \left(T^2/t^2 - 2(PK/2t^2)+1\right) Y_0 + K \left(T^2/t^2\right) MV \qquad (54)$$

Where

P = damping constant
K = spring constant
t = lag
T = discrete time interval
MV = initial displacement
Y = displacement at time interval (T)
$Y_1$ = displacement in previous time interval (T-1)
$Y_0$ = displacement at time interval (T-2)

Y is differentiated to obtain an acceleration value by the formula:

$$A = d^2y/dt^2 \qquad (60)$$

A range of theoretical values generated by formula 60 is, mathematically fitted to the calculated acceleration values by means of a curve fitting algorithm such as the "Nelder Mead" algorithm. The curve fitting algorithm iteratively adjusts the values for P, K and t until the series of Y values approximate the series of measured displacement values within tolerable limits. It is to be appreciated that any other curve fitting algorithm can be used to fit the range of theoretical displacement values to the calculated range of values. The values for the damping constant (P), the spring constant (K) and the lag (t) are thus determined.

The damping factor (P) is a measure of the effective damping force of the measured shock absorber. Preferably, the procedure is repeated a number of times, e.g. three times, and the average of the best samples presented as a result.

By comparing the damping factor (P) to a previously stored quantitative damping factor from the manufacturer of the shock absorber, the processor 32 calculates whether the damping factor (P) is within tolerable limits of the quantitative damping factor and, if not, generates an alarm.

The result of the calculation is then displayed on the indicator 14. For example, the indicator 14 will display a percentage value of the effectiveness of the shock absorber and will indicate if the shock absorber should be replaced or not. The processor 32 has sufficient memory to store the results of a number of successive shock absorber tests and can download the test results to a PC. The processor 32 is also programmed to give a warning if insufficient or excessive displacement is made to the vehicle during the test.

The Inventor believes that the shock absorber monitoring system 10, as illustrated, provides a system for determining the damping factor of a shock absorber which is accurate and is easily effected by simply attaching the accelerometer 12 to the vehicle and displacing the vehicle downwardly.

**Claims**

1. A method of determining the damping factor of a shock absorber which includes

   attaching an accelerometer (12) to one of a first and a second part of the shock absorber;

   displacing the first and second parts of the shock absorber relative to one another at least once;

   measuring the acceleration of the parts of the shock absorber relative to each other by reading a signal from the accelerometer (12) over a period of time at discrete intervals, to generate a series of measured acceleration values (50); and

   determining the damping factor of the shock absorber by modeling the movement properties of the shock absorber mathematically with a differential equation to generate a series of theoretical acceleration values (52) and mathematically fitting the series of theoretical acceleration values (52) to the series of measured acceleration values (50).

2. A method as claimed in claim 1, which includes attaching the accelerometer to a vehicle body (16) proximate one of the wheels (11) of the vehicle body (16) and which is fast with one of the first part and the second part of the shock absorber.

3. A method as claimed in claim 1, in which the differential equation is of the second order.

4. A method as claimed in claim 1, in which the mathematical fitting of the series of theoretical acceleration values (52) to the series of measured acceleration values (50) is performed iteratively.

5. A method as claimed in claim 4, in which the iterative fitting of the series of theoretical acceleration values (52) to the series of measured acceleration values (50) is repeated until a predefined correlation between the series of theoretical (52)- and measured (50) acceleration values is obtained.

6. A method as claimed in claim 5, in which the mathematical fitting of the series of theoretical acceleration values (52) to the series of measured acceleration values (50) employs a "Nelder Mead" algorithm.

7. A method as claimed in claim 6 , in which a damping constant from the fitted series of theoretical acceleration values (52) is generated from the mathematical model, thereby to approximate the damping factor of the shock absorber with the damping constant generated from the mathematical model and which includes comparing the approximated damping factor of the shock absorber with qualitative data from a manufacturer of the shock absorber.

8. A method as claimed in claim 7 , which includes generating an alarm when the approximated damping factor falls outside tolerable limits of the qualitative data.

9. A method as claimed in claim 7 , which includes repeating the method a plurality of times, storing the damping factors thereby obtained, and calculating the average of the stored damping factors.

10. A shock absorber monitoring system (10), which includes

    an accelerometer (12) for generating an acceleration signal, the accelerometer (12) being removably attachable to one of a first part and a second part of a shock absorber;

    a processor (32) connected to the accelerometer (12), the processor (32) being operable to read the acceleration signal from the accelerometer (12) over a period of time at discrete intervals, to generate a series of measured acceleration values (50) and to calculate a damping factor of the shock absorber when the first- and second parts of the shock absorber are displaced relative to one another by modeling the movement properties of the shock absorber mathematically with a differential equation to generate a series of theoretical acceleration values (52) and mathematically fitting the series of theoretical acceleration values (52) to the series of measured acceleration values (50); and

    an indicator (14) responsive to the processor (32), operable to display a value representative of the damping factor of the shock absorber.

**11.** A shock absorber monitoring system (10) as claimed in claim 10, which includes a storage device (36) in which a set of instructions are stored, which instructions, when executed by the processor (32), direct the processor (32) to perform a set of mathematical calculations to model the movement properties of the shock absorber mathematically with a differential equation, to generate a series of theoretical acceleration values (52) and mathematically to fit the series of theoretical acceleration values (52) to the series of measured acceleration values (50).

**12.** A shock absorber monitoring system (10) as claimed in claim 10, in which the accelerometer (12) is remote from the processor (32).

**13.** A shock absorber monitoring system (10) as claimed in claim 12, in which the accelerometer (12) includes a radio frequency transmitter and the processor (32) includes a radio frequency receiver responsive to the transmitter, operable to receive the acceleration signal by means of a radio frequency signal.

**14.** A shock absorber monitoring system (10) as claimed in claim 10, which includes a communication port (38) connected to the processor (32), operable to send and receive data to and from a remote device, such as a personal computer.


**Patentansprüche**

**1.** Verfahren zum Bestimmen des Dämpfungsfaktors eines Stoßdämpfers, welches umfasst:

Anbringen eines Beschleunigungsmessers (12) an entweder einem ersten oder einem zweiten Teil des Stoßdämpfers;
mindestens einmaliges Verschieben des ersten und des zweiten Teils des Stoßdämpfers relativ zueinander;
Messen der Beschleunigung der Teile des Stoßdämpfers relativ zueinander durch Auslesen eines Signals von dem Beschleunigungsmesser (12) über eine Zeitperiode in diskreten Intervallen, um eine Reihe von gemessenen Beschleunigungswerten (50) zu erzeugen; und
Bestimmen des Dämpfungsfaktors des Stoßdämpfers durch modellhaftes mathematisches Abbilden der Bewegungseigenschaften des Stoßdämpfers mit einer Differenzialgleichung, um eine Reihe von theoretischen Beschleunigungswerten (52) zu erzeugen, und mathematisches Anpassen der Reihe von theoretischen Beschleunigungswerten (52) an die Reihe von gemessenen Beschleunigungswerten (50).

**2.** Verfahren nach Anspruch 1, welches das Anbringen des Beschleunigungsmessers an einer Fahrzeugkarosserie (16) nahe an einem der Räder (11) der Fahrzeugkarosserie (16), das mit entweder dem ersten Teil oder dem zweiten Teil des Stoßdämpfers fest verbunden ist, umfasst.

**3.** Verfahren nach Anspruch 1, bei welchem die Differenzialgleichung eine Gleichung der zweiten Ordnung ist.

**4.** Verfahren nach Anspruch 1, bei welchem die mathematische Anpassung der Reihe von theoretischen Beschleunigungswerten (52) an die Reihe von gemessenen Beschleunigungswerten (50) iterativ durchgeführt wird.

**5.** Verfahren nach Anspruch 4, bei welchem die iterative Anpassung der Reihe von theoretischen Beschleunigungswerten (52) an die Reihe von gemessenen Beschleunigungswerten (50) wiederholt wird, bis eine vorher festgelegte Korrelation zwischen der Reihe der theoretischen (52) und der gemessenen (50) Beschleunigungswerte erhalten wird.

**6.** Verfahren nach Anspruch 5, bei welchem die mathematische Anpassung der Reihe von theoretischen Beschleunigungswerten (52) an die Reihe von gemessenen Beschleunigungswerten (50) einen "Nelder-Mead"-Algorithmus verwendet.

**7.** Verfahren nach Anspruch 6, bei welchem eine Dämpfungskonstante von der angepassten Reihe von theoretischen Beschleunigungswerten (52) aus dem mathematischen Modell erzeugt wird, um dadurch den Dämpfungsfaktor des Stoßdämpfers an die aus dem mathematischen Modell erzeugte Dämpfungskonstante anzunähern, und welches das Vergleichen des angenäherten Dämpfungsfaktors des Stoßdämpfers mit qualitativen Daten von einem Hersteller des Stoßdämpfers umfasst.

**8.** Verfahren nach Anspruch 7, welches das Erzeugen eines Alarms umfasst, wenn der angenäherte Dämpfungsfaktor außerhalb tolerierbarer Grenzwerte der qualitativen Daten liegt.

**9.** Verfahren nach Anspruch 7, welches das mehrmalige Wiederholen des Verfahrens, das Speichern der dadurch erhaltenen Dämpfungsfaktoren und das Berechnen des Durchschnitts der gespeicherten Dämpfungsfaktoren umfasst.

**10.** Stoßdämpferüberwachungssystem (10), welches umfasst:

einen Beschleunigungsmesser (12) zum Erzeugen eines Beschleunigungssignals, welcher Beschleunigungsmesser (12) entweder an einem ersten Teil oder einem zweiten Teil eines Stoßdämpfers abnehmbar angebracht werden kann;

einen mit dem Beschleunigungsmesser (12) verbundenen Prozessor (32), welcher Prozessor (32) so arbeitet, dass er das Beschleunigungssignal von dem Beschleunigungsmesser (12) über eine Zeitperiode in diskreten Intervallen ausliest, eine Reihe von gemessenen Beschleunigungswerten (50) erzeugt und einen Dämpfungsfaktor des Stoßdämpfers berechnet, wenn der erste und der zweite Teil des Stoßdämpfers relativ zueinander verschoben werden, indem die Bewegungseigenschaften des Stoßdämpfers mit einer Differenzialgleichung mathematisch modellhaft abgebildet werden, um eine Reihe von theoretischen Beschleunigungswerten (52) zu erzeugen und die Reihe von theoretischen Beschleunigungswerten (52) an die Reihe von gemessenen Beschleunigungswerten (50) mathematisch anzupassen; und

eine auf den Prozessor (32) ansprechende Anzeigeeinrichtung (14), die so arbeitet, dass sie einen dem Dämpfungsfaktor des Stoßdämpfers entsprechenden Wert anzeigt.

**11.** Stoßdämpferüberwachungssystem (10) nach Anspruch 10, welches eine Speichereinrichtung (36) umfasst, in welcher eine Gruppe von Befehlen gespeichert ist, welche Befehle bei der Ausführung durch den Prozessor (32) den Prozessor (32) anweisen, eine Gruppe von mathematischen Berechnungen durchzuführen, um die Bewegungseigenschaften des Stoßdämpfers mit einer Differenzialgleichung mathematisch modellhaft abzubilden, eine Reihe von theoretischen Beschleunigungswerten (52) zu erzeugen und die Reihe der theoretischen Beschleunigungswerte (52) mathematisch an die Reihe der gemessenen Beschleunigungswerte (50) anzupassen.

**12.** Stoßdämpferüberwachungssystem (10) nach Anspruch 10, bei welchem der Beschleunigungsmesser (12) von dem Prozessor (32) beabstandet ist.

**13.** Stoßdämpferüberwachungssystem (10) nach Anspruch 12, bei welchem der Beschleunigungsmesser (12) einen Radiofrequenzsender enthält und der Prozessor (32) einen auf den Sender ansprechenden Radiofrequenzempfänger enthält, der so arbeitet, dass er das Beschleunigungssignal mittels eines Radiofrequenzsignals empfängt.

**14.** Stoßdämpferüberwachungssystem (10) nach Anspruch 10, welches einen mit dem Prozessor (32) verbundenen Kommunikationsanschluss (38) aufweist, der so arbeitet, dass er Daten zu einer entfernten Einrichtung, wie zum Beispiel einem Personalcomputer, sendet und von diesem empfängt.

**Revendications**

**1.** Procédé de détermination du coefficient d'amortissement d'un amortisseur qui comprend :

la fixation d'un accéléromètre (12) à l'une d'une première et d'une seconde parties de l'amortisseur ;

le déplacement de la première et de la seconde parties de l'amortisseur l'une par rapport à l'autre au moins une fois ;

la mesure de l'accélération des parties de l'amortisseur l'une par rapport à l'autre en lisant un signal provenant de l'accéléromètre (12) pendant une période de temps à des intervalles discrets, pour générer une série de valeurs d'accélération mesurées (50) ; et

la détermination du coefficient d'amortissement de l'amortisseur en modélisant les propriétés de déplacement de l'amortisseur de façon mathématique avec une équation différentielle pour générer une série de valeurs d'accélération théoriques (52) et en ajustant de façon mathématique la série de valeurs d'accélération théoriques (52) par rapport à la série de valeurs d'accélération mesurées (50).

**2.** Procédé selon la revendication 1, qui comprend la fixation de l'accéléromètre à un corps de véhicule (16) à proximité de l'une des roues (11) du corps de véhicule (16) et qui est solidaire de l'une de la première partie et de la seconde partie de l'amortisseur.

**3.** Procédé selon la revendication 1, dans lequel l'équation différentielle est du deuxième ordre.

**4.** Procédé selon la revendication 1, dans lequel l'ajustement mathématique de la série de valeurs d'accélération théoriques (52) par rapport à la série de valeurs d'accélération mesurées (50) est effectué de façon itérative.

**5.** Procédé selon la revendication 4, dans lequel l'ajustement itératif de la série de valeurs d'accélération théoriques (52) par rapport à la série de valeurs d'accélération mesurées (50) est répété jusqu'à ce qu'une corrélation prédéfinie entre les séries de valeurs d'accélération théoriques (52) et mesurées (50) soit obtenue.

**6.** Procédé selon la revendication 5, dans lequel l'ajustement mathématique de la série de valeurs d'accélération théoriques (52) par rapport à la série de valeurs d'accélération mesurées (50) emploie un algorithme de Nelder-Mead.

**7.** Procédé selon la revendication 6, dans lequel une constante d'amortissement provenant de les séries de valeurs d'accélération théoriques (52) ajustée est générée à partir du modèle mathématique, pour ainsi se rapprocher du coefficient d'amortissement de l'amortisseur avec la constante d'amortissement générée à partir du modèle mathématique et qui comprend la comparaison du coefficient d'amortissement approximé de l'amortisseur avec des données qualitatives provenant d'un fabricant de l'amortisseur.

**8.** Procédé selon la revendication 7, qui comprend la génération d'une alarme lorsque le coefficient d'amortissement approximé se trouve en dehors des limites tolérables des données qualitatives.

**9.** Procédé selon la revendication 7, qui comprend la répétition du procédé à plusieurs reprises, le stockage des coefficients d'amortissement ainsi obtenus, et le calcul de la moyenne des coefficients d'amortissement stockés.

**10.** Système de contrôle d'amortisseur (10), qui comprend
un accéléromètre (12) apte à générer un signal d'accélération, l'accéléromètre (12) étant propre à être fixé de façon amovible sur l'une d'une première partie et d'une seconde partie d'un amortisseur ;
un processeur (32) relié à l'accéléromètre (12), le processeur (32) étant propre à être activé pour lire le signal d'accélération provenant de l'accéléromètre (12) pendant une période de temps à des intervalles discrets, pour générer une série de valeurs d'accélération mesurées (50) et pour calculer un coefficient d'amortissement de l'amortisseur lorsque les première et seconde parties de l'amortisseur sont déplacées l'une par rapport à l'autre en modélisant les propriétés de déplacement de l'amortisseur de façon mathématique avec une équation différentielle pour générer une série de valeurs d'accélération théoriques (52) et en ajustant de façon mathématique la série de valeurs d'accélération théoriques (52) par rapport à la série de valeurs d'accélération mesurées (50) ; et
un indicateur (14) qui réagit au processeur (32), propre à être activé pour afficher une valeur représentative du coefficient d'amortissement de l'amortisseur.

**11.** Système de contrôle d'amortisseur (10) selon la revendication 10, qui comprend un dispositif de stockage (36) dans lequel un ensemble d'instructions sont stockées, lesquelles instructions, lorsqu'elles sont exécutées par le processeur (32), commandent le processeur (32) pour qu'il effectue un ensemble de calculs mathématiques pour modéliser les propriétés de déplacement de l'amortisseur de façon mathématique avec une équation différentielle, pour générer une série de valeurs d'accélération théoriques (52) et pour ajuster de façon mathématique la série de valeurs d'accélération théoriques (52) par rapport à la série de valeurs d'accélération mesurées (50).

**12.** Système de contrôle d'amortisseur (10) selon la revendication 10, dans lequel l'accéléromètre (12) se trouve à distance du processeur (32).

**13.** Système de contrôle d'amortisseur (10) selon la revendication 12, dans lequel l'accéléromètre (12) comprend un émetteur de radiofréquences et le processeur (32) comprend un récepteur de radiofréquences qui réagit à l'émetteur, propre à être activé pour recevoir le signal d'accélération au moyen d'un signal de radiofréquence.

**14.** Système de contrôle d'amortisseur (10) selon la revendication 10, qui comprend un port de communication (38) relié au processeur (32), propre à être activé pour envoyer et recevoir des données en direction et à partir d'un dispositif à distance, tel qu'un ordinateur personnel.

FIG 1

10

12

20

18

30

14

32

34

36

38

46

40

42

44

45

*FIG 2*

52

50

*FIG 3*

FIG 4

FIG 4(cont.)

FIG 4(cont.)